# FASCICULE DE BREVET EUROPEEN

(11) **EP 0 365 411 B1**
(45) Date de publication et mention de la délivrance du brevet: **22.12.1993**
(21) Numéro de dépôt: 89402838.0
(22) Date de dépôt: 13.10.1989
(51) Int. Cl.: A01D 61/00, A01D 41/12

(54) **Convoyeur pour moissonneuse-batteuse de céréales**
Fördereinrichtung für Getreidemähdrescher
Hoisting device for combine harvester of cereals

(30) Priorité: 14.10.1988 FR 8813589
(43) Date de publication de la demande: 25.04.1990
(73) Titulaire: Zachary, Alain, F-08400 Vouziers (FR)
(72) Inventeur: Zachary, Alain, F-08400 Vouziers (FR)
(74) Mandataire: Clanet, Denis

(56) Documents cités:
- WO-A-85/02315
- DE-C- 661 408

## Description

La présente invention concerne un convoyeur pour moissonneuse-batteuse de céréales.

Dans les moissonneuses-batteuses, le dispositif de moissonnage se trouve naturellement au voisinage du sol, tandis que le batteur se trouve monté sur le châssis de la machine à une certaine hauteur du sol.

Il convient donc d'élever la nappe de matières récoltées sortant du dispositif de moissonnage jusqu'à la hauteur de l'entrée du batteur, et à cet effet, les machines existantes comprennent un convoyeur simple, formant une rampe inclinée depuis le premier jusqu'au second.

Le DE-C 661 408 qui décrit les caractéristiques du préambule de la revendication 1, décrit un convoyeur à deux segments articulés pour régler la hauteur des moyens de coupe par rapport au sol.

Le WO 85/02315 décrit un convoyeur reliant une nappe à un batteur et comportant un espace pour recueillir les pierres disposé entre son extrémité supérieure et l'entrée du batteur.

Avec ces machines, on constate trois problèmes :
- le premier est celui de l'homogénéité de la nappe de matières récoltées,
- le second est celui de l'angle d'alimentation du batteur, et
- le troisième est celui de le présence de pierres dans la nappe de matières récoltées.

L'homogénéité de le nappe de matières récoltées admises dans le batteur est un facteur important pour le bon fonctionnement de ce dernier. Or, avec des convoyeurs à simple rampe, la nappe de matières récoltées parvient à l'entrée du batteur exactement dans le même état qu'elle quitte le dispositif de moissonnage et présente une homogénéité très relative puisque les organes de mise en nappe, en général des vis d'Archimède opposées situées en aval du dispositif de moissonnage, ne sont pas conçus pour homogénéiser la nappe qu'ils rassemblent.

De plus, l'inclinaison du convoyeur est dictée par des considérations mécaniques : distances verticale et horizontale à parcourir, et cette inclinaison ne correspond pas forcément à l'angle optimal d'alimentation du batteur.

Enfin, le dispositif de moissonnage entraîne des pierres qui se retrouvent dans la nappe de matières récoltées et risquent d'endommager le batteur, tout au moins celles qui ne sont pas évacuées dans le bac à pierres prévu habituellement entre le convoyeur et le batteur.

Afin de pallier ces inconvénients, la présente invention propose un convoyeur de céréales destiné à convoyer une nappe de matières récoltées depuis un dispositif de moissonnage jusqu'à un batteur ; ledit convoyeur comportant deux segments successifs, le premier segment étant agencé de manière à pouvoir débuter à un dispositif de moissonnage et le second aboutissant au batteur sous un angle d'incidence par rapport au plan tangent de l'entrée dudit batteur, caractérisé en ce qu'il comporte en outre des moyens agencés de façon à entraîner les deux segments de convoyeur à des vitesses linéaires différentes.

Le premier avantage est donc que l'alimentation du batteur par le second segment de convoyeur s'effectue suivant un angle optimal pour le fonctionnement du batteur.

Le second avantage est que la nappe subit, lors de son passage du premier segment de convoyeur au second des tensions et/ou relaxations différentielles provoquées par la différence de vitesse entre les deux convoyeurs, et ces tensions s'exerçant de préférence sur les zones de la nappe les plus denses, ce qui a pour résultat de réduire leur densité et de rendre la nappe plus homogène.

Enfin, les deux segments de convoyeur sont séparés par un intervalle par lequel peuvent s'échapper les pierres entraînées avec la nappe le long du premier segment.

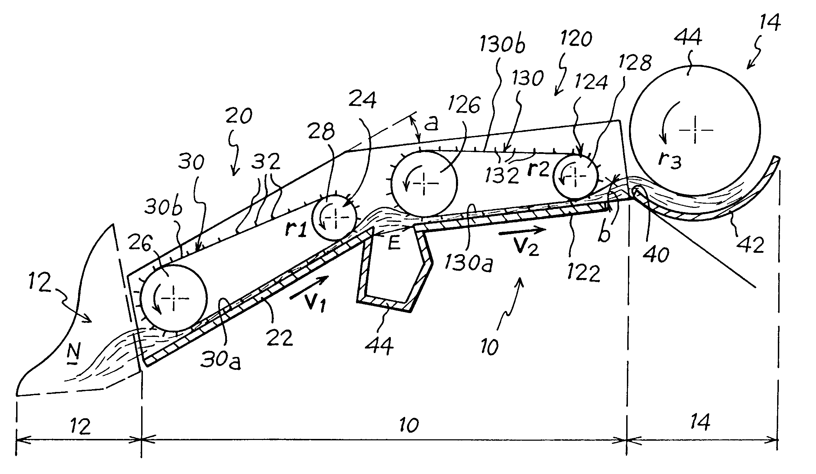

Les détails et avantages de l'invention apparaîtront clairement à la lecture de la description qui va suivre, en se référant à la figure annexée qui est une vue latérale schématique d'un convoyeur conforme à la présente invention.

Le convoyeur, désigné dans son ensemble par la référence 10 à la figure annexée qui est une vue latérale schématique d'un convoyeur conforme à la présente invention.

Le convoyeur, désigné dans son ensemble par la référence 10 à la figure, est destiné à être interposé entre un dispositif de coupe ou de moissonnage 12 et un batteur 14 d'une moissonneuse-batteuse, les autres parties de la machine n'ayant pas été représentées par simplification.

A sa partie postérieure, le dispositif de coupe délivre une nappe de matières récoltées N plus ou moins homogène et parfois chargée de pierres.

Conformément à la présente invention, le convoyeur se compose de deux segments de convoyeurs successifs.

Le premier segment 20 comprend une table 22 sur laquelle glisse la nappe de matières, et un dispositif d'entraînement 24 placé au-dessus de la table et parallèlement à celle-ci.

Comme illustré, le dispositif d'entraînement 24 comprend deux arbres horizontaux parallèles 26, 28, l'un 26 en partie basse de la table et l'autre 28 en partie haute, et une chaîne sans fin 30 enroulée autour des arbres 26, 28 et présentant un brin inférieur d'entraînement 30a au voisinage de la table, et un brin supérieur de retour 30b.

La chaîne est garnie de griffes ou barres transversales 32 par lesquelles elle entraîne la nappe de matières récoltées le long de la table 22. L'un des arbres est entraîné en rotation à la vitesse r₁, l'autre arbre est monté fou et tourne donc à la même vitesse tangentielle, et la nappe progresse donc le long du premier segment à une vitesse V₁, proportionnelle à r₁.

Bien entendu, le nombre de chaînes 30 le long des arbres 26, 28 dépendra de la largeur de la nappe N.

Le second segment de convoyeur 120 comprend des éléments analogues au premier, qui porteront les mêmes chiffres de référence, augmentés de 100.

L'arbre moteur du second segment de convoyeur est entraîné à une vitesse de rotation r₂, et par voie de conséquence la nappe est entraînée par la chaîne 130 à une vitesse V₂, proportionnelle à r₂, le long de la table 122.

L'angle d'inclinaison du second segment de convoyeur est choisi de manière à faire avec la lèvre d'entrée 40 du contre-batteur fixe 42 un angle choisi b, correspondant à l'angle optimal d'alimentation de la nappe dans le batteur entre le rotor 44 entraîné en rotation à la vitresse r₃ et le contre-batteur fixe 42.

Le premier segment de convoyeur 20 est simplement disposé entre la sortie du dispositif de coupe et le second segment de convoyeur, sans autres précautions particulières, et forme avec ce dernier un angle a qui dépendra de dimensions des divers éléments de la machine.

Les deux tables de convoyeur 22, 122 sont séparées par un intervalle E, sous lequel est disposée un bac à pierres 44.

Ainsi, lorsque la nappe N quitte la table 22 du premier segment de convoyeur 20, à une vitesse V₁, elle subit jusqu'à son entrée de la table 122 ou le second segment de convoyeur l'entraîne a une vitesse V₂, des gradients de tensions/relaxations dus à la fois au changement de vitesse et au changement de direction d'angle a dont l'effet est de rendre la nappe plus homogène, à la fois dans le sens de sa largeur et dans le sens de son épaisseur.

De plus, lors de son passage au-dessus de l'intervalle E, les pierres entraînées avec la nappe tomberont naturellement par cet intervalle dans le bac à pierres. On observera que le bac à pierres est ici beaucoup plus accessible que dans les appareils antérieurs où il est accolé au batteur.

En outre, dans le cadre de l'invention, on pourra prévoir divers compléments :
- le montage articulé des deux segments de convoyeur 20, 120 afin de permettre un réglage de l'angle a à volonté ;
- le réglage de la vitesse V₂ afin de déterminer une alimentation optimale du batteur ;
- le réglage des vitesses respectives V₁ et V₂ afin d'optimiser l'homogénéisation de la nappe lors de son passage du premier au second segment de convoyeur.

On remarquera enfin que le surcroît de consommation énergétique dû à la conception du convoyeur sera compensé par une réduction de la consommation énergétique du batteur puisque celui-ci fonctionne dans des conditions optimales et régulières du fait qu'il est alimenté par une nappe homogène.

L'avantage d'une meilleure homogénéité est de permettre un fonctionnement plus rapide de la machine. En effet, même lorsque l'homogénéité moyenne d'une nappe entraînée par un convoyeur classique reste bien en dessous de la limite de "bourrage" du batteur, il peut apparaître dans la nappe des zones de densité excessive qui provoquent le bourrage.

Au contraire, grâce à l'invention, l'écart de densité des différentes parties de la nappe par rapport à la densité moyenne est plus faible et le risque de bourrage est réduit, ce qui permet un fonctionnement à vitesse plus élevée.

De préférence, les arbres moteurs des deux convoyeurs seront les arbres supérieurs 28, 128 et leurs diamètres seront inférieurs à ceux des arbres fous inférieurs 26, 126. Une telle disposition améliorera la transmission de puissance aux chaînes. De plus, la tendance à l'enroulement des matières récoltées autour des arbres moteurs sera fortement diminuée.

Bien que l'invention ait été décrite et illustrée en association avec un batteur orienté transversalement, il va de soi qu'elle peut être appliquée à une moisonneuse-batteuse à batteur axial.

Il peut également être prévu que le batteur soit séparé d'une certaine distance de l'extrémité du second convoyeur et qu'un rouleau d'alimentation intermédiaire soit monté entre eux.

## Revendications

1. Convoyeur (10) pour moissonneuse-batteuse de céréales, destiné à convoyer une nappe (N) de matières récoltées depuis un dispositif de moissonnage (12) jusqu'à un batteur (14); ledit convoyeur comportant deux segments (20, 120) successifs, le premier segment (20) étant agencé de manière à pouvoir débuter à un dispositif de moissonnage et le second (120) étant agencé pour aboutir au batteur (14) sous un angle d'incidence (b) par rapport au plan tangent de l'entrée dudit batteur, caractérisé en ce qu'il comporte en outre des moyens agencés de façon à entraîner les deux segments de convoyeur (20, 120) à des vitesses linéaires différentes (V₁, V₂).

2. Convoyeur selon la revendication 1, caractérisé en ce que les deux segments de convoyeur (20, 120) sont séparés par un intervalle (E) destiné à la chute de pierres.

3. Convoyeur selon la revendication 1, caractérisé en ce que les deux segments de convoyeur (20, 120) forment entre eux un angle (a).

4. Convoyeur selon la revendication 1, caractérisé en ce que chaque segment de convoyeur (20, 120) comporte une table (22, 122) de glissement de la nappe (N) et un dispositif d'entraînement (24, 124) situé au-dessus de la table (22, 122).

5. Convoyeur selon la revendication 4, caractérisé en ce que le dispositif d'entraînement comporte deux arbres parallèles (26, 28 ; 126, 128) et au moins une chaîne (30, 130) sans fin à griffes (32, 132) enroulée autour des deux arbres de manière à présenter un brin d'entraînement (30a, 130a) au dessus et au voisinage de la table (22, 122).

6. Convoyeur selon la revendication 5, caractérisé en ce que les arbres moteurs des segments de convoyeur sont les arbres supérieurs (28, 128), ces derniers étant d'un diamètre inférieur à celui des arbres inférieurs (26, 126).

## Claims

1. Conveyor (10) for a combine harvester-thresher of cereals, designed for conveying a strip (N) of harvested material from a harvesting device (12) to a thresher (14), said conveyor comprising two successive segments (20, 120), the first segment (20) being arranged in such a manner as to be able to start at a harvesting device and the second (120) being arranged so as to end at the thresher (14) at a relief angle (b) with respect to the tangent plane of the inlet of said thresher, characterized in that it further comprises means arranged so as to drive both segments of the conveyor (20, 120) at different linear speeds (V₁, V₂).

2. Conveyor according to claim 1, characterized in that the two conveyor segments (20, 120) are separated by a distance (E) intended for falling rocks.

3. Conveyor according to claim 1, characterized in that the two conveyor segments (20, 120) form together an angle (a).

4. Conveyor according to claim 1, characterized in that each conveyor segment (20, 120) comprises a sliding table (22, 122) for the strip (N) and a driving mechanism (24, 124) situated above the table (22, 122).

5. Conveyor according to claim 4, characterized in that the driving mechanism includes two parallel shafts (26, 28; 126, 128) and at least one conveyor chain (30, 130) with claws (32, 132) wound around the two shafts so as to present a driving end (30a, 130a) above and in the vicinity of the table (22, 122).

6. Conveyor according to claim 5, characterized in that the shafts driving the conveyor segments are the upper shafts (28, 128), said latter having a diameter which is smaller than the diameter of the lower shafts (26, 126).

## Patentansprüche

1. Fördereinrichtung (10) für einen Mähdrescher für Halmfrüchte zum Fördern eines Büschels (N) abgemähten Materials von einer Erntevorrichtung (12) zu einer Dreschtrommel (14), wobei die Fördereinrichtung zwei aufeinanderfolgende Segmente (20, 120) aufweist, deren erstes Segment (20) so angeordnet ist, daß es an einer Erntevorrichtung beginnt und deren zweites (120) so angeordnet ist, daß es an der Dreschtrommel (14) unter einem Neigungswinkel (b) in Bezug auf die Tangentialebene am Einlaß der Dreschtrommel aufhört,
dadurch **gekennzeichnet,** daß
sie unter anderem Einrichtungen aufweist, die dazu ausgelegt sind, die zwei Segmente der Fördereinrichtung (20, 120) mit unterschiedlichen Fördergeschwindigkeiten (V₁, V₂) anzutreiben.

2. Fördereinrichtung nach Anspruch 1,
dadurch gekennzeichnet, daß
die zwei Segmente der Fördereinrichtung (20, 120) durch den Abstand (E) voneinander getrennt sind, der dazu vorgesehen ist, daß Steine herausfallen können.

3. Fördereinrichtung nach Anspruch 1,
dadurch gekennzeichnet, daß
die zwei Segmente der Fördereinrichtung (20, 120) zwischen sich einen Winkel (a) einschließen.

4. Fördereinrichtung nach Anspruch 1,
dadurch gekennzeichnet, daß
jedes Segment der Fördereinrichtung (20, 120) eine Gleitfläche (22, 122) für die Büschel (N) sowie eine Antriebseinrichtung (24, 124), die über der Fläche (22, 122) angeordnet ist, aufweist.

5. Fördereinrichtung nach Anspruch 4,
dadurch gekennzeichnet, daß
die Antriebseinrichtung zwei parallele Achsen (26, 28; 126, 128) aufweist und zumindest eine mit Klauen (32, 132) versehene Endloskette (30, 130), die derartig um die zwei Wellen gelegt ist, daß sie überhalb und unmittelbar an der Fläche (22, 122) ein Antriebstrumm (30a, 130a) bildet.

6. Fördereinrichtung nach Anspruch 5,
dadurch gekennzeichnet, daß
die Motorachsen der Fördereinrichtungssegmente jeweils die höheren Achsen (28, 128) sind, wobei diese einen kleineren Durchmesser haben als die tiefergelegenen Achsen (26, 126).
